# EUROPÄISCHE PATENTANMELDUNG

(11) **EP 2 271 058 A1**
(43) Veröffentlichungstag der Anmeldung: **05.01.2011**
(21) Anmeldenummer: 09008762.8
(22) Anmeldetag: 03.07.2009
(51) Int. Cl.: H04L 29/12, H04L 29/08

(54) **Einrichtung und Verfahren zur Verteilung und Weiterleitung von Anforderungen zu einer Mehrzahl von Web-Servern in einer industriellen Automatisierungsanordnung**

(71) Anmelder: SIEMENS AKTIENGESELLSCHAFT, 80333 München (DE)
(72) Erfinder: Herberth, Harald, 90522 Oberasbach (DE); Volkmann, Frank, 90475 Nürnberg (DE)

(57) **Zusammenfassung**

Die Erfindung betrifft eine Einrichtung (E) und Verfahren zur Verteilung und Weiterleitung von Anforderungen zu einer Mehrzahl von Web-Servern (WS1, WS2, WS3) in einer industriellen Automatisierungsanordnung. Dabei ist die Einrichtung (E) zum Empfang von an einen Well-Known-Port (WKP) adressierten Anforderungen eingerichtet, und die Web-Server (WS1, WS2, WS3) sind mittels zumindest einer lokalen Adresse und mittels jeweils einer Port-Nummer adressierbar. Die Einrichtung (E) ist zur Auswertung der Ziel-URLs der Anforderungen eingerichtet, wobei die Anforderungen jeweils denselben Host-Header der Anforderung aufweisen und die Serveradressierungsanteile der Ziel-URLs identisch sein können, wobei ein Pfad-Anteil der URL jeweils einen der Web-Server (WS1, WS2, WS3) definiert und die Einrichtung (E) zur Weiterleitung der Anforderung an den durch die Pfadangabe definierten der Web-Server (WS1, WS2, WS3) eingerichtet ist.

## Beschreibung

Die Erfindung betrifft eine Einrichtung zur Verteilung und Weiterleitung von Anforderungen gemäß dem Oberbegriff des Patentanspruchs 1, und ein Verfahren zur Verteilung und Weiterleitung von Anforderungen gemäß dem Oberbegriff des Patentanspruchs 9.

In automatisierungstechnischen Einrichtungen und Anordnungen kommunizieren Komponenten und Einrichtungen häufig mittels des TCP/IP-Protokolls und anderer aus dem Internet bekannten Netzwerkprotokollen. Neben dem bloßen Austausch von automatisierungstechnischen Daten, also der Übertragung von Messwerten und Befehlen/Anweisungen, werden diese sog. "Web-Technologien" vielfach auch für die Anbindung von Beobachtungs- und Bedienstationen, sog. HMI-Interfaces (HMI = Human-Machine-Interface) verwendet. Gerade in diesem Zusammenhang, aber nicht nur in diesem Zusammenhang, sind automatisierungstechnische Einrichtungen oft mit sog. "Web-Servern" ausgerüstet, also mit Programmen, welche Daten und Informationen derart bereitstellen, dass sie mit Anforderungen gemäß des HTTP-Protokolls und ähnlicher Protokolle (z.B. HTTPS-Protokoll o.ä.) zugegriffen werden können. Da diese Web-Server prinzipiell durch Installierung einer Software bzw. eines Software-Paketes auf einer Hardware-Plattform errichtet werden, ist es auch möglich, auf ein- und derselben Hardware-Plattoform mehrere solcher Web-Server zeitgleich zu betreiben.

Werden auf einem PC oder auf einem Server mehrere Applikationen mit jeweils einem eigenen Web-Server installiert, so führt dies zu dem Problem, dass alle diese Web-Server jeweils einen eigenen TCP/IP-Port benutzen müssen, um für Anforderungen erreichbar zu sein. Problematisch ist dabei, dass es nur einen reservierten "Well-Known-Port" für Web-Server gibt, nämlich den Port mit der Nummer 80.

Dieses Problem wird im Stand der Technik beispielsweise dadurch gelöst, dass mehrere (private oder dynamische) Port-Nummern für die Adressierung der verschiedenen Web-Server auf einer Maschine verwendet werden. Da diese Portnummern privat, also nicht "well-known" sind, muss ein Anwender (Client) bzw. dessen Web-Browser oder Browser-ähnliche Anwendung über die vom "Standard" abweichende Portnummer informiert werden. Ein weiterer Nachteil ergibt sich daraus, dass solche Ports, die nicht dem Standard entsprechen, zumeist durch übliche Firewall-Einrichtungen und durch übliche Proxy-Server gesperrt oder nicht unterstützt werden, so dass solche Lösungen zumeist nur in privaten LANs verwendbar sind.

Eine weitere Möglichkeit, die Adressierung einer Mehrzahl von Web-Servern auf einer "Maschine" zu ermöglichen, besteht im Einsatz von sog. "Transcodern" oder "Reverse Proxies". Dabei wird ein zentraler Web-Server, ein sog. "Portal-Web-Server" eingesetzt, der die von einem Client angeforderten Seiten selbst von den unterlagerten Web-Servern anfordert. Bevor diese Seiten und anderen Informationen zu dem anfordernden Client gesendet werden, werden diese Informationen transcodiert, d.h., dass alle Verweise auf (z.B. Hyperlinks) den Ursprungs-Web-Server (unterlagerter Web-Server) derart umgesetzt werden, dass in den Fällen, in denen der Client später diese Verweise anfordert, die Anforderungen nicht an den unterlagerten Web-Server gesendet werden, sondern wiederum an den Portal-Web-Server. Zudem müssen auch bei dieser Technologie die Anforderungen Daten enthalten, anhand derer der Portal-Web-Server entscheiden kann, an welchen der untergelagerten Web-Server die jeweilige Anforderung weitergeleitet werden soll. Nachteile dieser Methode liegen in der hohen Komplexität der Transcoder. Beim Einsatz von Technologien wie JavaScript oder Ajax ist die Technologie des "Transcoden" regelmäßig nicht kompatibel, da hierbei der Programmcode jeweils analysiert werden müsste.

Es ist also eine Aufgabe der vorliegenden Erfindung, eine Einrichtung und ein Verfahren anzugeben, womit eine Mehrzahl von Web-Servern, denen ein identischer Host-Name bzw. eine identische Host-IP-Adresse zugeordnet sind, unterscheidbar adressiert werden können.

Es ist ein zentraler Gedanke der erfindungsgemäßen Lösung, eine Einrichtung ("Dispatcher-Webserver") vorzusehen, welche über ein Netzwerk über einen Well-Known-Port, vorzugsweise den Port mit der Nummer 80, erreicht ("adressiert") werden kann. Diese Einrichtung soll eingehende Anforderungen ("Requests") unverändert auf unterlagerte Web-Server verteilen, bzw. an diese Weiterleiten. Da alle unterlagerten Web-Server auf ein- und derselben Maschine installiert sein können, weist eine Anforderung in ihrer Ziel-URL in jedem Fall immer denselben Host-Anteil auf, unabhängig davon, für welchen der unterlagerten Web-Server die Anforderung bestimmt ist. Erfindungsgemäß soll dabei ein Pfad-Anteil der Ziel-URL zur Unterscheidung der unterlagerten Web-Server verwendet werden; die URLs der unterlagerten Web-Server müssen also nur hinsichtlich ihres Pfad-Anteils disjunkt sein.

Die Aufgabe wird insbesondere durch eine Einrichtung gemäß dem Patentanspruch 1 gelöst. Dabei ist eine Einrichtung zur Verteilung und Weiterleitung von Anforderungen zu einer Mehrzahl von Web-Servern in einer industriellen Automatisierungsanordnung vorgesehen, wobei die Einrichtung zum Empfang der an einen Well-Known-Port adressierten Anforderungen eingerichtet ist, und wobei die Web-Server mittels zumindest einer lokalen Adresse und mittels jeweils einer Port-Nummer adressierbar sind. Die Einrichtung ist weiter zur Auswertung der Ziel-URLs der Anforderungen eingerichtet, wobei die Anforderungen jeweils denselben Host-Header der Anforderung aufweisen können, wobei die Serveradressierungsanteile der URLs identisch sein können, und wobei ein Pfad-Anteil der URL jeweils einen der Web-Server definiert. Die Einrichtung ist schließlich zur Weiterleitung der Anforderung an den durch die Pfadangabe definierten der Web-Server eingerichtet.

Durch den Einsatz einer solche Einrichtung können auf ein- und derselben Hardware-Plattform mehrere Web-Server integriert werden, wobei alle diese Web-Server über den Well-Known-Port (Port 80) erreichbar sind, so dass keine Einschränkungen hinsichtlich der Verwendung von Firewalls, Proxy-Servern etc. bestehen, und wobei anfordernde Web-Browser ihre Anforderungen (Requests) an den Well-Known-Port adressieren könnnen.

Die Lösung der Aufgabe sieht weiterhin ein Verfahren zur Verteilung und Weiterleitung von Anforderungen zu einer Mehrzahl von Web-Servern in einer industriellen Automatisierungsanordnung vor, wobei in einem ersten Schritt eine Einrichtung eine an einen Well-Known-Port adressierte Anforderung empfängt, in einem zweiten Schritt die Einrichtung die in der Anforderung enthaltene Ziel-URL auswertet, wobei die Einrichtung anhand des Pfadanteils der URL einen aus einer Mehrzahl von Web-Servern als Ziel der Anforderung identifiziert, und wonach die Einrichtung die Anforderung an den identifizierten der Web-Server weiterleitet. Durch den Einsatz eines solchen Verfahrens wird eine eindeutige Adressierung auch von solchen Web-Servern ermöglicht, welche auf demselben Host installiert sind bzw. denselben Host-Anteil in ihrer URL aufweisen.

Vorteilhafte Ausgestaltungen der erfindungsgemäßen Einrichtung sind in den abhängigen Patentansprüchen angegeben. Die dabei beschriebenen Merkmale und Vorteile gelten sinngemäß auch für das erfindungsgemäße Verfahren.

Vorzugsweise leitet die Einrichtung die Anforderungsmeldungen unverändert an den entsprechend identifizierten der Web-Server weiter, wodurch mögliche Fehler und Aufwand einer Transcodierung vermieden werden können; der Inhalt der Anforderungen und Meldungen braucht also nicht geändert werden.

Vorzugsweise werden zur Adressierung der Web-Server IP-Port-Nummern von privaten oder dynamischen Ports verwendet, wodurch sichergestellt ist, dass keine anderweitig genutzten Well-Known-Ports blockiert werden. In einer vorteilhaften Ausgestaltung sind einige oder alle der Web-Server auf einer gemeinsamen Hardware-Plattform installiert. Dadurch wird beispielsweise vermieden, dass dem Netzwerk-Interface dieser Hardware-Plattform ("Maschine") eine Mehrzahl von IP-Adressen (nämlich für jeden der Web-Server eine) zugewiesen werden muss. Außerdem sind die Web-Server vorteilhaft über die "localhost"-Adresse IP-Adresse 127.0.0.1) adressierbar; dies gilt für die vorteilhafte Ausgestaltung der Erfindung, in der die Einrichtung auf einer gemeinsamen Hardware-Plattform mit einigen oder allen der Web-Server installiert ist. Dadurch kann der Datenverkehr zwischen der Einrichtung und den Web-Servern intern in der "Maschine" abgewickelt werden, ohne Ressourcen des Netzwerkes zu beanspruchen. Weiterhin kann dadurch die Sicherheit erhöht werden ("Security Aspekt"), da die einzelnen Web-Server nicht direkt aus dem Netzwerk erreichbar sein müssen.

Vorteilhaft wird als der Well-Known-Port der IP-Port mit der Nummer 80 verwendet, weil dies derjenige Well-Known-Port ist, an den Clients (z.B. Web-Browser) üblicher Weise Ihre Anforderungen ("Requests") adressieren. Für das HTTPS-Protokoll wird analog dazu vorteilhaft der Well-Known-Port mit der Nummer 443 verwendet.

Die Einrichtung ist vorteilhaft zum Weiterleiten solcher Anforderungen, die keine oder keine eindeutige Adressierung mittels des Pfad-Anteils der Ziel-URL ermöglichen, an einen vordefinierten der Web-Server eingerichtet. Dadurch ist sichergestellt, dass solche Anforderungen, die nicht "korrekt" adressiert sind, dennoch beantwortet werden. In einer vorteilhaften Ausgestaltung kann die Einrichtung selbst dieser vordefinierte Web-Server sein.

Um einen bidirektionalen Datenverkehr zu ermöglichen, ist die Einrichtung vorteilhaft zur Weiterleitung von Antwortnachrichten der Web-Server auf zuvor an die Web-Server weitergeleitete Anforderungen an ein verwendetes Netzwerk und damit an einen ursprünglich anfordernden Client eingerichtet. Dazu bedient sich die Einrichtung solcher Vorgehensweisen, die aus dem Stand der Technik bekannt sind,beispielsweise mit Hilfe sog. "Routing-Tabellen", in denen die zuvor an die Web-Server weitergeleiteten Anforderungen protokolliert sind.

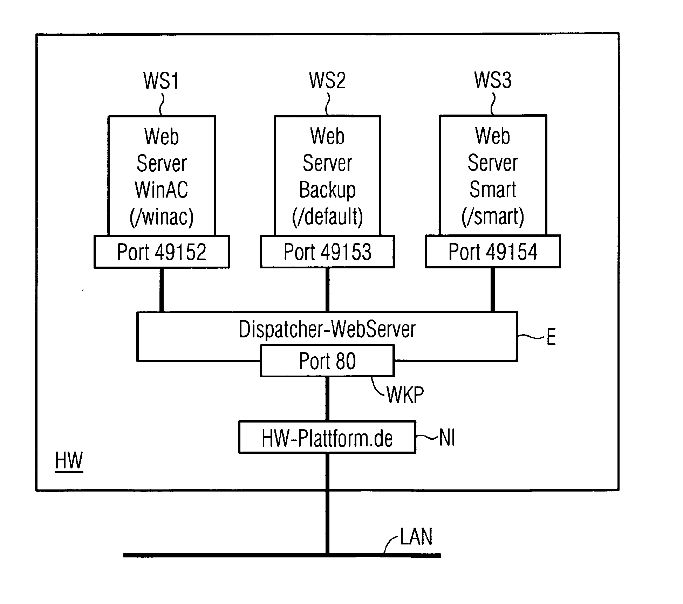

Ausführungsbeispiele der erfindungsgemäßen Einrichtung werden nachfolgend anhand der Zeichnung erläutert. Sie dienen gleichzeitig der Erläuterung eines erfindungsgemäßen Verfahrens.

Dabei zeigt die einzige Figur in schematischer Darstellung eine an einem Netzwerk angeschlossene Hardware-Plattform mit der Einrichtung und drei "unterlagerten" Web-Servern.

In der Figur ist schematisch eine Hardware-Plattform HW dargestellt, die im vorliegenden Ausführungsbeispiel eine automatisierungstechnische Komponente mit mehreren Funktionen ist. Die Hardware-Plattform HW ist an ein Netzwerk LAN mittels eines Netzwerk-Interfaces NI ("Netzwerk Karte", "LAN-Interface") verbunden. Das Netzwerk-Interface NI wird im vorliegenden Ausführungsbeispiel vorwiegend zum Austausch protokollgemäßer Nachrichten gemäß dem TCP/IP-Protokoll verwendet. Mit einer bidirektionalen Software-Schnittstelle, einem sog. "Socket", des Netzwerk-Interfaces NI ist die nachfolgend beschriebene Einrichtung E ("Dispatcher-Webserver") verbunden, welche für die Software-Schnittstelle den Well-Known-Port WKP mit der Nummer 80 verwendet; dieser Well-Known-Port WKP mit der Nummer 80 ist dem Dienst HTTP zugeordnet, der von den ebenfalls in der Figur dargestellten "unterlagerten" Web-Servern WS1, WS2, WS3 angeboten wird. Diese Web-Server WS1, WS2, WS3 sind über private IP-Ports mit den Nummern 49152, 49153, 49154 über eine sog. "localhost"-Adresse, also intern in der Hardware-Plattform HW, logisch mit der Einrichtung E verbunden. Diese "localhost"-Adresse mit der IP-Adresse 127.0.0.1 bildet zusammen mit der jeweiligen privaten IP-Portnummer jeweils die interne logische Adresse der Web-Server WS1, WS2, WS3. Während die hier aufgeführten Ausführungsbeispiele sich auf das Protokoll IPv4 beziehen, ist die Erfindung selbstverständlich auch in IPv6-Netzwerken anwendbar.

Die Web-Server WS1, WS2, WS3 haben für die automatisierungstechnische Anordnung, die hier betrachtet wird, unterschiedliche Funktionen. Dabei ist beispielsweise der Web-Server WS1 einer als Software ausgebildeten und unter dem Betriebssystem "Microsoft Windows" lauffähigen automatisierungstechnischen Steuerungseinheit "WinAC" zugeordnet; der Web-Server WS3 ist einer Applikation mit dem Namen "Smart" zugeordnet, und schließlich ist der Web-Server WS2 "Backup" einem allgemeinen Informationssystem zugeordnet, welches u.a. kontaktiert werden soll, wenn Anforderungen ("Requests") nicht anderweitig zugeordnet werden können.

Im Folgenden sei angenommen, dass eine (nicht dargestellte) anderweitige automatisierungstechnische Komponente, ein sog. "Client", eine Startseite des Web-Servers WS1 abruft. Dazu wird über das Netzwerk LAN folgende Anforderung an die Hardware-Plattform HW gesendet:
GET /winac/index.html HTTP/1.1 Host: www.hw-plattform.de Connection: close

Durch die Angabe des Protokolls "HTTP" wird die Anforderung mit der URL "www.hw-plattform/winac/index" an die Einrichtung mit der Portnummer 80 des "Hosts" mit der Bezeichnung "hw-plattform.de" adressiert, also zu der Einrichtung E übertragen. Die Einrichtung E wertet nun den "Pfadanteil" der URL aus; dieser Pfadanteil ist hierbei "/winac"; der Adressierungsanteil "www.hw-plattform.de" des "Host-Headers" wird nicht für die Auswahl des Ziel-Web-Servers herangezogen. In einer (hier nicht dargestellten) Routing-Tabelle der Einrichtung E ist festgelegt, dass alle Anforderungen, die sich auf diese Pfadangabe "/winac" beziehen, an eine IP-Adresse derselben Hardware-Plattform HW geroutet werden soll, hier an das "localhost"-Interface mit der IP-Portnummmer 49152, also an den Web-Server WS1, der der Applikation WinAC zugeordnet ist. Danach leitet die Einrichtung E die Anforderungsnachricht an diesen Web-Server WS1 weiter. Selbstverständlich könnte die Anforderung auch an eine andere Hardware-Plattform (Maschine) geroutet werden. Die Einrichtung E erweitert weiterhin im vorliegenden Ausführungsbeispiel ihre Routing-Tabellen um einen Eintrag, welcher besagt, dass eine etwaige Antwortmeldung des Web-Servers WS1 auf die soeben weitergeleitete Anforderung an die ursprünglich die Anforderung versendende Komponente (den Client) übermittelt werden soll. Es sind jedoch auch andere Wege denkbar, die zu einer korrekten Weiterleitung von Antwortmeldungen führen können.

Wie bereits erwähnt, wird im vorliegenden Ausführungsbeispiel der Web-Server WS2 als Weiterleitungsziel für solche Anforderungen (Requests) verwendet, welche nicht korrekt adressiert sind. In einer vorteilhaften Ausgestaltung kann der Web-Server WS2 aber auch ein Ausweich-Ziel in denjenigen Fällen darstellen, in denen einer der Web-Server WS1, WS3 ausfällt. Ein solcher Ausfall kann beispielsweise von der Einrichtung E festgestellt werden, wenn protokollgemäße Quittierungsmeldungen bei der Übertragung von Datenpaketen ausbleiben ("timeout"). In einem solchen Szenario, in dem Redundanzen geschaffen werden sollen, kann es vorteilhaft sein, wenn zumindest der "Backup"-Web-Server WS2 auf einer anderen physikalischen Maschine (Hardware-Plattform) installiert ist.

## Patentansprüche

1. Einrichtung (E) zur Verteilung und Weiterleitung von Anforderungen zu einer Mehrzahl von Web-Servern (WS1, WS2, WS3) in einer industriellen Automatisierungsanordnung,
**dadurch gekennzeichnet,**
**dass** die Einrichtung (E) zum Empfang von an einen Well-Known-Port (WKP) adressierten Anforderungen eingerichtet ist,
**dass** die Web-Server (WS1, WS2, WS3) mittels zumindest einer lokalen Adresse und mittels jeweils einer Port-Nummer adressierbar sind,
**dass** die Einrichtung (E) zur Auswertung der Ziel-URLs der Anforderungen eingerichtet ist, wobei die Anforderungen jeweils denselben Host-Header der Anforderung aufweisen können und die Serveradressierungsanteile der Ziel-URLs identisch sein können , und wobei ein Pfad-Anteil der URL jeweils einen der Web-Server (WS1, WS2, WS3) definiert, und
**dass** die Einrichtung (E) zur Weiterleitung der Anforderung an den durch die Pfadangabe definierten der Web-Server (WS1, WS2, WS3) eingerichtet ist.

2. Einrichtung (E) nach Patentanspruch 1,
**dadurch gekennzeichnet, dass**
die Einrichtung zur unveränderten Weiterleitung der Anforderungen an den durch die Pfadangabe definierten der Web-Server (WS1, WS2, WS3) eingerichtet ist.

3. Einrichtung (E) nach einem der vorhergehenden Patentansprüche,
**dadurch gekennzeichnet, dass**
die zur Adressierung der Web-Server (WS1, WS2, WS3) verwendeten Port-Nummern private oder dynamische Ports kennzeichnen.

4. Einrichtung (E) nach einem der vorhergehenden Patentansprüche,
**dadurch gekennzeichnet, dass**
einige oder alle der Web-Server (WS1, WS2, WS3) auf einer gemeinsamen Hardware-Plattform (HW) installiert sind.

5. Einrichtung (E) nach einem der vorhergehenden Patentansprüche,
**dadurch gekennzeichnet, dass**
die Einrichtung (E) auf einer gemeinsamen Hardware-Plattform (HW) mit einigen oder allen der Web-Server (WS1, WS2, WS3) installiert ist.

6. Einrichtung (E) nach einem der vorhergehenden Patentansprüche,
**dadurch gekennzeichnet, dass**
der Well-Known-Port (WKP) der IP-Port mit der Nummer 80 ist.

7. Einrichtung (E) nach einem der vorhergehenden Patentansprüche,
**dadurch gekennzeichnet, dass**
die Einrichtung (E) zum Weiterleiten solcher Anforderungen, die keine oder keine eindeutige Adressierung mittels des Pfad-Anteils der Ziel-URL ermöglichen, an einen vordefinierten der Web-Server (WS1, WS2, WS3) eingerichtet ist.

8. Einrichtung (E) nach einem der vorhergehenden Patentansprüche,
**dadurch gekennzeichnet, dass**
die Einrichtung (E) zur Weiterleitung von Antwortnachrichten der Web-Server (WS1, WS2, WS3) auf zuvor weitergeleitete Anforderungen an ein verwendetes Netzwerk (LAN) eingerichtet ist.

9. Verfahren zur Verteilung und Weiterleitung von Anforderungen zu einer Mehrzahl von Web-Servern (WS1, WS2, WS3) in einer industriellen Automatisierungsanordnung,
**dadurch gekennzeichnet, dass**
in einem ersten Schritt eine Einrichtung (E) eine an einen Well-Known-Port (WKP) adressierte Anforderung empfängt,
dass in einem zweiten Schritt die Einrichtung (E) die in der Anforderung enthaltene Ziel-URL auswertet, wobei die Einrichtung (E) anhand des Pfadanteils der Ziel-URL einen aus einer Mehrzahl von Web-Servern (WS1, WS2, WS3) als Ziel der Anforderung identifiziert, und
dass die Einrichtung (E) die Anforderung an den identifizierten der Web-Server (WS1, WS2, WS3) weiterleitet.
